# EUROPEAN PATENT SPECIFICATION

(11) **EP 3 785 977 B1**
(45) Date of publication and mention of the grant of the patent: **05.08.2026**
(21) Application number: 20178909.6
(22) Date of filing: 09.06.2020
(51) Int. Cl.: B60L 9/28

(54) **RAILWAY VEHICLE**
SCHIENENFAHRZEUG
VÉHICULE FERROVIAIRE

(30) Priority: 30.08.2019 JP 2019157882
(43) Date of publication of application: 03.03.2021
(73) Proprietor: Hitachi, Ltd., Tokyo 100-8280 (JP)
(72) Inventor: MATSUSHIMA, Kiyoto, Chiyoda-ku,, Tokyo 100-8280 (JP)
(74) Representative: Strehl & Partner mbB

(56) References cited:
- EP-A1- 2 377 714
- WO-A1-2017/194765
- DE-A1- 102017 222 446
- DE-T5- 112007 002 331
- FR-A1- 2 985 487
- JP-A- H04 193 001
- JP-A- H10 313 501
- JP-A- H11 355 910

## Description

### BACKGROUND OF THE INVENTION

### 1. Field of the Invention

The present invention relates to a railway vehicle including a motor.

### 2. Description of the Related Art

In an electric railway vehicle, a three-phase alternating current power is generated by a main conversion device such as an inverter based on a power obtained from an overhead wire, and is supplied to a motor on a bogie through a three-phase wire to rotationally drive the motor. A variable voltage variable frequency (VVVF) method is used to generate the three-phase alternating current power in the main conversion device. According to the method, although highly efficient shift control of the motor is possible, potential variation at a neutral point of a stator winding in the motor occurs due to a control sequence of switching elements in the main conversion device.

When the motor is driven in the railway vehicle having the above configuration, the potential variation occurred at the neutral point of the stator winding appears on a frame or the like of the motor through a parasitic capacitance. Then, the potential variation diffuses and flows out as a common mode noise current to a vehicle body and rails by electrical coupling with all conductive structures such as wires, bogie frames, and axles in the vicinity of the noise current, and forms a path to return to the main conversion device. When a ground wire of an on-vehicle device or the like exists on a return current path of the noise current, a reference potential of a device or the like may be disturbed and malfunctions may be caused. Further, the noise current flowing out to the rails may be coupled with a signal device disposed on tracks and may induce an inductive disturbance, and may propagate to an adjacent vehicle or the like to cause a damage range expansion. Therefore, it is necessary to take a measure for preventing the diffusion of the above-described noise current.

As a technique for preventing the noise current due to the motor, JP-A-4-193001 (PTL 1) discloses that "a grounding device for a drive device of an electric vehicle according to the invention is configured such that one end of a wiring duct made of a conductive metal material between a control device and a drive motor is connected to a control device box, the other end of the wiring duct is connected to a stator frame, and a harmonic current generated in an armature winding is directly absorbed by a semiconductor device controller without passing through a vehicle body" (see Solution to Problem).

PTL 1 discloses a configuration example that prevents a noise current flowing out to the other structures including the vehicle body, in which one end of a wiring duct that houses a three-phase wire insulated from the vehicle body is connected to a box of the main conversion device and the other end of the wiring duct is connected to a motor frame, such that the wiring duct serves as a noise current path. In the configuration, a parasitic capacitance between the three-phase wire and the wiring duct and a parasitic capacitance between the wiring duct and the vehicle body are not taken into consideration, and most of the noise current including high frequency components in an MHz band appears on the wiring duct through the parasitic capacitances, so that the noise current may diffuse and flow out to the vehicle body, which is an inductance conductor having a lower inductance than that of the wiring duct.

As in PTL 1, the railway vehicle in the related art is designed such that the noise current path does not include the vehicle body as much as possible. However, in an actual vehicle configuration, the vehicle body, which is a surface conductor that is larger than a diameter of the wire or the wiring duct, continuously covers the main conversion device and the motor, and exists close to the three-phase wire. Therefore, it is difficult to completely eliminate influences of a parasitic capacitance and mutual induction with the vehicle body and to prevent formation of a current path through the vehicle body. Further, when separately configuring a return path using a wire or the like in order to prevent the formation of a current path, a new noise current path having lower inductance is formed via a parasitic capacitance with a three-phase wire or a motor peripheral structure, which on the contrary complicates the problems.

JP H10 313501 A discloses a grounding circuit with the features in the preamble of present claim 1. Another example for a conventional train system is described in EP 2 377 714 A1.

### SUMMARY OF THE INVENTION

Therefore, unlike the railway vehicle design in the related art, the invention aims to provide a railway vehicle that positively utilizes a vehicle body as a noise current main path starting from a motor, and prevents a noise current from diffusing and flowing out to structures other than the vehicle body, rails, or the like.

In order to solve the problems, a configuration described in claim 1 is adopted.

According to the invention, a railway vehicle that prevents a noise current starting from a motor from diffusing and flowing out to structures other than a vehicle body, rails, or the like can be provided.

Problems, configurations, and effects other than those described above will be clarified by the following description of embodiments.

### BRIEF DESCRIPTION OF THE DRAWINGS

FIG. 1A is a configuration diagram showing a railway vehicle configuration and a noise current path according to Embodiment 1 of the invention, as viewed from a side.
FIG. 1B is a configuration diagram showing the railway vehicle configuration and the noise current path according to Embodiment 1 of the invention, as viewed from below.
FIG. 2A is a configuration diagram showing a railway vehicle configuration and a noise current path in the related art, as viewed from a side.
FIG. 2B is a configuration diagram showing the railway vehicle configuration and the noise current path in the related art, as viewed from below.
FIG. 3A is a diagram showing an analysis result of a noise current distribution on a lower surface of a vehicle body in a vehicle configuration in the related art when a wire support structure is a trough-shaped structure.
FIG. 3B is a diagram showing an analysis result of a noise current distribution on a lower surface of a vehicle body in a vehicle configuration according to Embodiment 1 when a wire support structure is a trough-shaped structure.
FIG. 4 is a diagram showing the analysis result of the noise current distribution on the lower surface of the vehicle body in the vehicle configuration according to Embodiment 1 when the wire support structure is a ladder-shaped structure.
FIG. 5 is a diagram showing a configuration example of a return conductor according to Embodiment 1 of the invention.
FIG. 6 is a diagram showing a configuration example of a return conductor according to embodiment 1 of the invention.
FIG. 7 is a diagram showing another configuration example of the return conductor according to Embodiment 1 of the invention.
FIG. 8 is a diagram showing a configuration of a railway vehicle according to Embodiment 2 of the invention.
FIG. 9 is a diagram showing a configuration of a railway vehicle according to Embodiment 3 of the invention.
FIG. 10 is a diagram showing an example of ground connection of an on-vehicle device according to an example for understanding the invention.

### DESCRIPTION OF THE PREFERRED EMBODIMENTS

Hereinafter, embodiments of the invention will be described in detail with reference to the drawings. In all the drawings for describing the embodiments, the same components are denoted by the same reference numerals in principle, and the repetitive description thereof will be omitted.

Embodiments are examples for describing the invention, and are omitted and simplified as appropriate for clarification of the description. The invention can be implemented in various other forms. Unless otherwise limited, each component may be singular or plural.

In order to facilitate understanding of the invention, a position, a size, a shape, a range, or the like of each configuration shown in the drawings may not represent an actual position, size, shape, range, or the like. Therefore, the invention is not necessarily limited to the position, the size, the shape, the range, or the like disclosed in the drawings.

### [Embodiment 1]

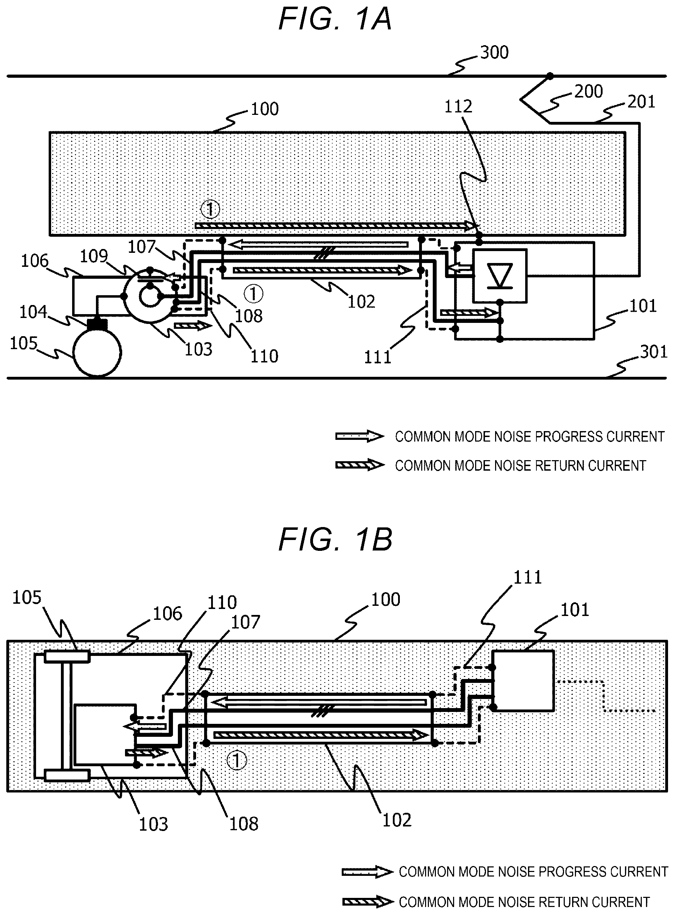

Hereinafter, a railway vehicle according to Embodiment 1 of the invention will be described with reference to FIGS. 1 to 7. In the present embodiment, a form of a railway vehicle having a specific configuration is described. Configuration specifications of the invention are not limited to the present embodiment, and can be modified as appropriate according to configurations and arrangements of devices and wires mounted on the vehicle. Further, an applicable vehicle is not limited to a vehicle that travels by obtaining a power from an overhead wire or a third rail. Any vehicle that can generate a noise current returning from a motor to a main conversion device can be applied regardless of a power system of a new transportation system, a magnetic levitation railway, or the like.

FIGS. 1A and 1B are diagrams showing the railway vehicle in the present embodiment. FIG. 1A is a configuration diagram viewed from a side, and FIG. 1B is a configuration diagram viewed from below the vehicle. The railway vehicle according to the present embodiment travels on equipment including an overhead wire 300 that transmits a drive power of the railway vehicle from a substation, and a rail 301 that serves as a traveling path of the railway vehicle and a return current path to the substation. The railway vehicle of the present embodiment includes: a vehicle body 100, which is a metal structure; a pantograph 200 that obtains a power from the overhead wire 300; a high-voltage wire 201 that transmits the power obtained by the pantograph 200; a wheel 105 that contacts the rail 301 and supports the vehicle; a motor 103 that receives a three-phase alternating current power and rotationally drives the wheel 105; a bogie frame 106 that fixes and supports the motor 103; a grounding device 104 that is connected to the rail 301 via the wheel 105; a main conversion device 101 that generates the three-phase alternating current power for rotationally driving the motor 103; a three-phase wire 107 that connects the main conversion device 101 and the motor 103 to transmit the three-phase alternating current power; a wire support structure 102 that supports the three-phase wire 107 such that the three-phase wire 107 is close to the vehicle body 100 side; and a frame ground wire 108 that is provided as a main path for returning a low-frequency noise current induced on a frame of the motor 103 to the main conversion device 101. The railway vehicle further includes: a return conductor 110 that connects the frame of the motor 103 and the vehicle body 100 or the wire support structure 102 having the same potential as the vehicle body 100; a ground conductor a111 that connects, on the three-phase wire 107 side, the main conversion device 101 and the vehicle body 100 or the wire support structure 102 having the same potential as the vehicle body 100; and a ground conductor b112 that connects the main conversion device 101 and the vehicle body 100 to the ground. Reference numeral 109 indicates a parasitic capacitance existing between a stator in the motor 103 and the frame.

The wire support structure 102 shown in the drawings is intended as a trough-shaped structure that continuously covers a space between the main conversion device 101 and the motor 103, with the vehicle body side open. Alternatively, the wire support structure 102 may be a structure such as a rack structure or a duct structure configured in a ladder shape as long as the structure can fix and support the three-phase wire 107 such that the three-phase wire 107 is close to the vehicle body side. Further, it is desirable that metal members forming respective support structures are electrically connected to the vehicle body 100 so as not to be floating conductors. When the duct structure is adopted, it is desirable that the wire support structure 102 is electrically connected to the vehicle body 100 at a plurality of points so as to have the same potential as the vehicle body 100. In the figures, the frame of the motor 103 and the grounding device 104 are shown to be connected by a wire, and the above configuration is a configuration generally adopted for the purpose of allowing a noise voltage induced on the frame of the motor 103 to release to the rail 301. The configuration may be omitted if the frame ground wire 108 for releasing the same noise voltage to the main conversion device 101 is sufficiently functioning, but it is desirable to dispose at least one of the above configurations. In the figures, the frame ground wire 108 is shown as one wire. Alternatively, a plurality of wires may be disposed for the purpose of reducing inductance. Further, the frame ground wire 108 is preferably laid as close to the three-phase wire 107 as possible in order to enhance a mutual induction effect with the three-phase wire 107. In the figures, as grounding units of the main conversion device 101, the ground conductor a111 and the ground conductor b112 are shown in parallel. Alternatively, if a resistance value between the vehicle body 100 and the ground conductor a111 is below a standard, the ground conductor b112 may be omitted. Further, when the ground conductor b112 is provided, the ground conductor b112 is preferably provided as close as possible to an outlet of the three-phase wire 107 on the main conversion device 101. Further, in the figures, the high-voltage wire 201 is shown to be directly connected to the main conversion device 101 on an assumption of direct current feeding. The invention is not limited to a direct current vehicle. In a case of alternating current feeding, a transformer, a direct current converter, or the like are appropriately added to the inside of the main conversion device 101.

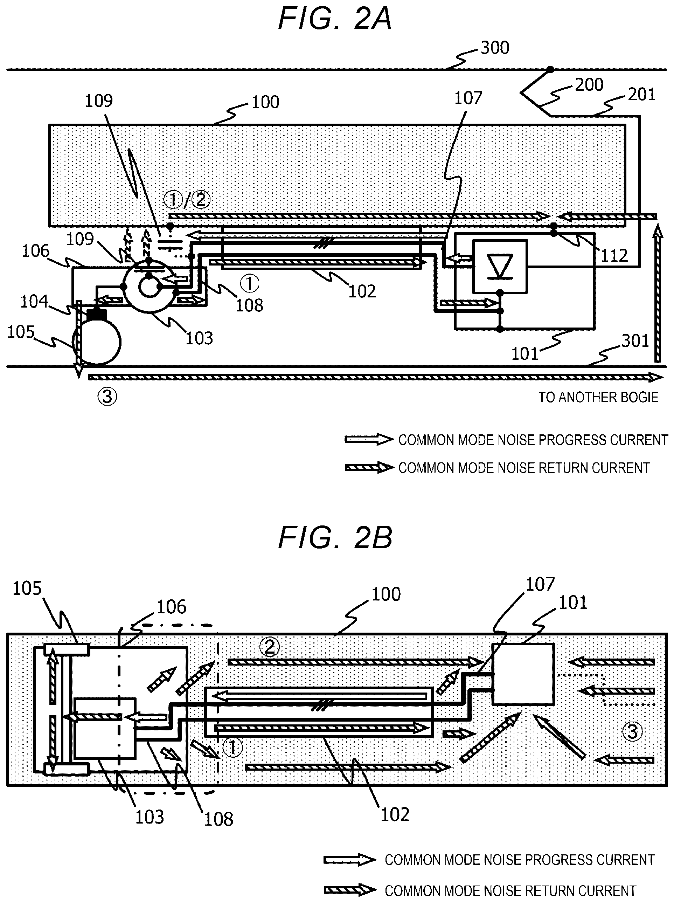

In FIGS. 2A and 2B, common mode noise current paths that appear on the frame of the motor 103 in the vehicle configuration in the related art will be described. FIG. 2A is a configuration diagram viewed from a side, and FIG. 2B is a configuration diagram viewed from below the vehicle. In the figures, a current flowing from the main conversion device 101 to the motor 103 is defined as a common mode noise progress current, and a current returning from the motor 103 to the main conversion device 101 is defined as a common mode noise return current. At this time, the noise return current has mainly three paths. The three paths are respectively (1) a path through which the current flows on the vehicle body 100 and the trough-shaped wire support structure 102, which are close to the three-phase wire 107, due to the mutual induction effect, (2) a path through which the current diffuses and flows on the vehicle body 100 that is a low-inductance conductor via the parasitic capacitance 109 existing around a noise progress current path, and (3) a path through which the current flows from an adjacent vehicle through a rail to other bogies through the ground wire or the like connected to the frame of the motor 103, and diffuses on the vehicle body 100.

Wires and structures of the railway vehicle connected from the vehicle body 100 to a bogie unit, such as the three-phase wire 107, have a region requiring flexibility with extra length because the bogie unit rotates at a pitch angle in a track curve portion (FIG. 2B, dotted broken line portion) . Therefore, in the vehicle configuration in the related art, a structure having no flexibility such as a wire support structure cannot be disposed in the same region, which hinders formation of the noise return current path of (1). Therefore, most of the noise return current diffuses and flows out to the paths of (2) and (3), which may cause malfunctions of signal devices and on-vehicle devices on a track. In the future, there is a concern that the noise return current path is complicated due to a faster switching speed of the main conversion device 101, damage target devices increase as the number of the on-vehicle devices having low-power drive increases, and it is difficult to solve the problems with measures in the related art such as addition of ferrite cores and shield members. Therefore, it is necessary to design a stable noise return current path.

In the configuration of the present embodiment shown in FIGS. 1A and 1B, the return conductor 110 is additionally connected in the region where the flexibility of the three-phase wire 107 between the wire support structure 102 and the motor 103 on the bogie is required. Here, the region where the flexibility is required is a region including at least a region between the motor 103 and an end of the wire support structure 102 on the motor side. The return conductor 110 electrically connects the frame of the motor 103 and the vehicle body 100 or the wire support structure 102 connected to the vehicle body, and is disposed so as to be close to and along the three-phase wire 107. Accordingly, the mutual induction effect of the three-phase wire 107 and the return conductor 110 is generated, and the noise current path of (1), which has a large induction effect of the noise return current can be utilized.

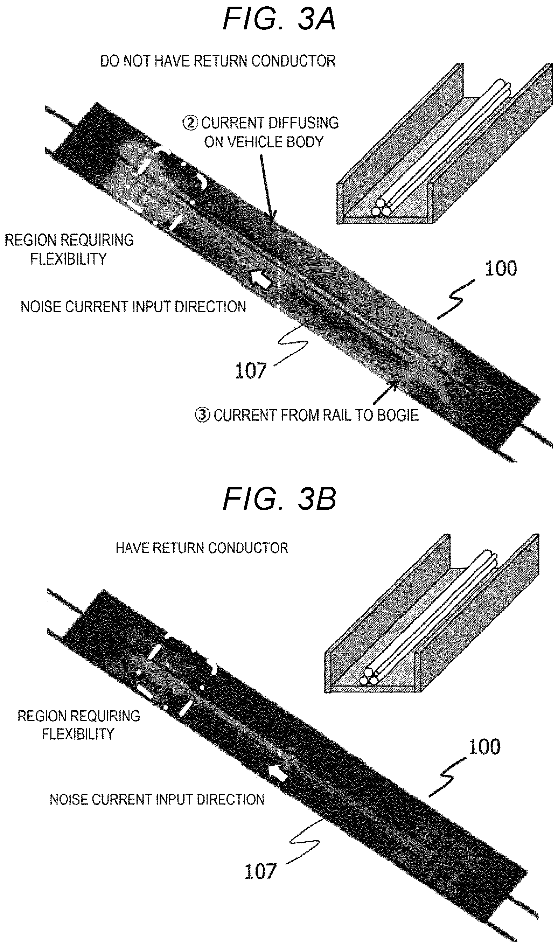

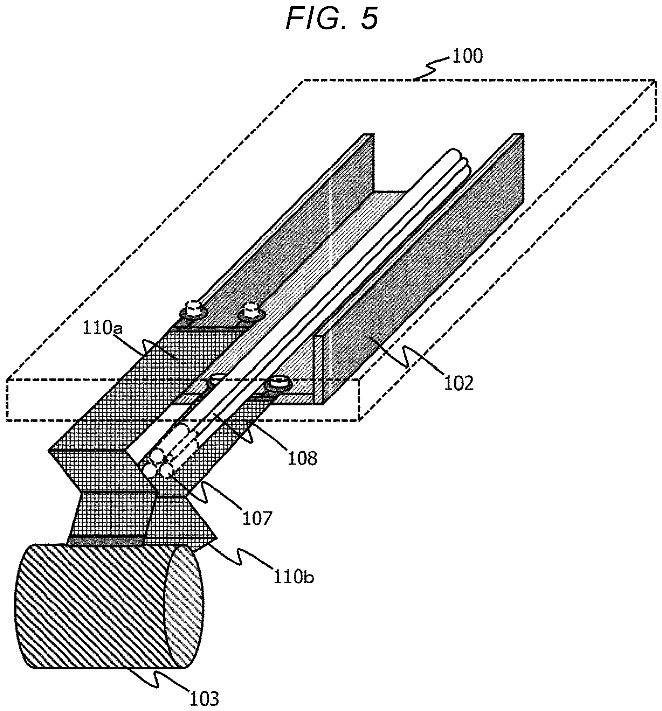

In FIGS. 3A and 3B, analysis results of a noise current distribution on the vehicle body 100 (viewed from below the vehicle) is shown in a case where the wire support structure 102 is configured in a trough shape and a common mode noise current of 4 MHz is input to one end of the three-phase wire 107 disposed in a center portion of the vehicle body 100. FIG. 3A is an analysis result of the vehicle configuration in the related art and FIG. 3B is an analysis result of the vehicle configuration (a configuration in which planar return conductors are additionally connected above and below the three-phase wire in the region where the flexibility is required; see FIG. 5 described later) of the present embodiment, which mean that the closer to white, the larger the noise current. According to the analysis result shown in FIG. 3A, in the vehicle configuration in the related art, induction of (2) the path through which the current diffuses and flows on the vehicle body via the parasitic capacitance existing around the noise progress current path and (3) the path through which the current diffuses and flows on the vehicle body through the rail to other bogies through the ground wire or the like connected to the frame of the motor can be confirmed starting from a region where the wire support structure 102 in the vicinity of the bogie unit is interrupted. On the other hand, in the analysis result in FIG. 3B of the present embodiment having a return conductor, (1) the path through which the current flows on the vehicle body and the trough-shaped wire support structure close to the three-phase wire due to the mutual induction effect becomes dominant, the noise return currents on the paths (2) and (3) are reduced by -30 dB or more. That is, according to the configuration of the present embodiment, a railway vehicle in which the noise return currents are less diffused can be provided.

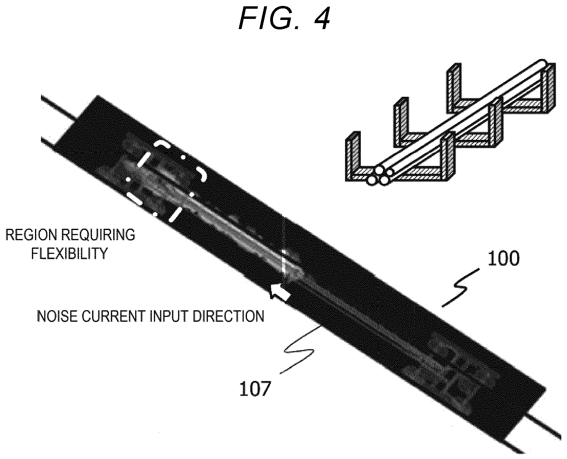

FIG. 4 shows an analysis result of a noise current distribution on the vehicle body 100 when the wire support structure 102 is configured in the ladder shape under the similar analysis conditions as in FIGS. 3A and 3B. Even though sides and a lower side are open compared to the trough-shaped structure, a noise return current is concentrated only on a surface on the vehicle body 100 facing the three-phase wire 107 due to the mutual induction effect, and generation of a noise return current that diffuses on the vehicle body 100 and returns is prevented. That is, a railway vehicle in which the noise return current is less diffused can be provided with a lighter wire support structure.

FIG. 5 shows a configuration example of a return conductor. The configuration example is an example in which the frame of the motor 103 is simply and effectively connected to the wire support structure 102 that supports the three-phase wire 107 and the frame ground wire 108 and that has the same potential as the vehicle body 100. Although the three-phase wire 107 and the frame ground wire 108 are divided for convenience of illustration, actually, the three-phase wire 107 and the frame ground wire 108 are respectively drawn to and connected to terminals of respective phases of the stator of the motor 103. In the configuration example, a portion of the three-phase wire 107 between the motor 103 and the end of the wire support structure 102 starting from the vicinity of the main conversion device 101 requires the flexibility. A return conductor 110a is a planar shape or a low-inductance path formed of a plurality of wires, and the return conductor 110a is preferably disposed such that electrostatic coupling between the vehicle body 100 and the three-phase wire 107 is sparse, a noise path continuous with the vehicle body 100 is formed, and at least an upper side of the three-phase wire 107 on the vehicle body 100 side is covered. In the example, in order to enhance the mutual induction effect, a return conductor 110b is also disposed on a lower side of the three-phase wire 107. Each of the return conductors 110a and 110b has one end connected to the frame of the motor 103, and the other end connected to a conductor such as the wire support structure 102 having the same potential as the vehicle body 100. In the figure, the return conductor 110a on the upper side is connected to the vehicle body 100, and the return conductor 110b on the lower side is connected to the wire support structure 102. The return conductors 110a and 110b are disposed along the three-phase wire 107 such that the mutual induction effect between the return conductors 110a and 110b and the three-phase wire 107 is enhanced. The above-described connection positions are preferably within a range of 1 m from a position where a separation distance between the vehicle body 100 and the three-phase wire 107 changes such that the mutual induction effect can be sufficiently obtained. At this time, the connection positions of the return conductors 110a and 110b may be extended to the main conversion device 101 side if the return conductors 110a and 110b are disposed along the three-phase wire 107. Further, when there is a concern that attitudes of the return conductors 110a and 110b may change due to wind pressure during traveling, a wire such as the three-phase wire 107 and the return conductors 110a and 110b may be appropriately fixed together. The planar conductor needs to be a flexible material that can withstand the pitch rotation of the bogie unit, and a planar braided wire or a plurality of wires is applied. According to the configuration example, a railway vehicle in which the noise return current is less diffused can be provided by simple additional modifications.

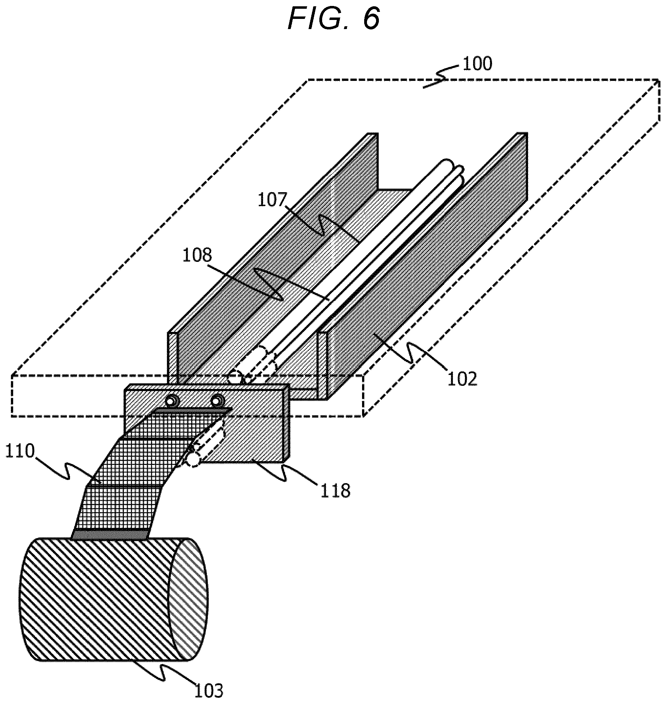

FIG. 6 shows a configuration example of a return conductor according to embodiment 1 of the invention. In this example, a relay terminal block 118 that relays the three-phase wire 107 and the frame ground wire 108 is provided between the wire support structure 102 and the motor 103, and the return conductor 110 is provided in a vehicle configuration in consideration of workability when the bogie unit and the vehicle body 100 are separated. Although the three-phase wire 107 and the frame ground wire 108 are divided for convenience of illustration, actually, the three-phase wire 107 and the frame ground wire 108 are respectively continuously connected to the relay terminal block 118 and the terminals of respective phases of the stator of the motor 103. In the configuration example, a portion of the three-phase wire 107 between the relay terminal block 118 and the motor 103 requires the flexibility. When a wire support structure exists between the relay terminal block 118 and the motor 103, an end of the wire support structure is used as a starting point. The return conductor 110 has one end connected to the frame of the motor 103, and the other end connected to a conductor such as the relay terminal block 118 having the same potential as the vehicle body 100 or directly connected to the vehicle body 100. When the separation distance between the three-phase wire 107 and the vehicle body 100 changes in a space between the wire support structure 102 and the relay terminal block 118, a return conductor may be additionally disposed along the path of the three-phase wire 107 such that both ends of the return conductor are electrically connected to the vehicle body 100 or a structure having the same potential as the vehicle body 100. According to the configuration example, a railway vehicle, which is excellent in workability during attaching and detaching between the vehicle body and the bogie and in which the noise return current is less diffused, can be provided.

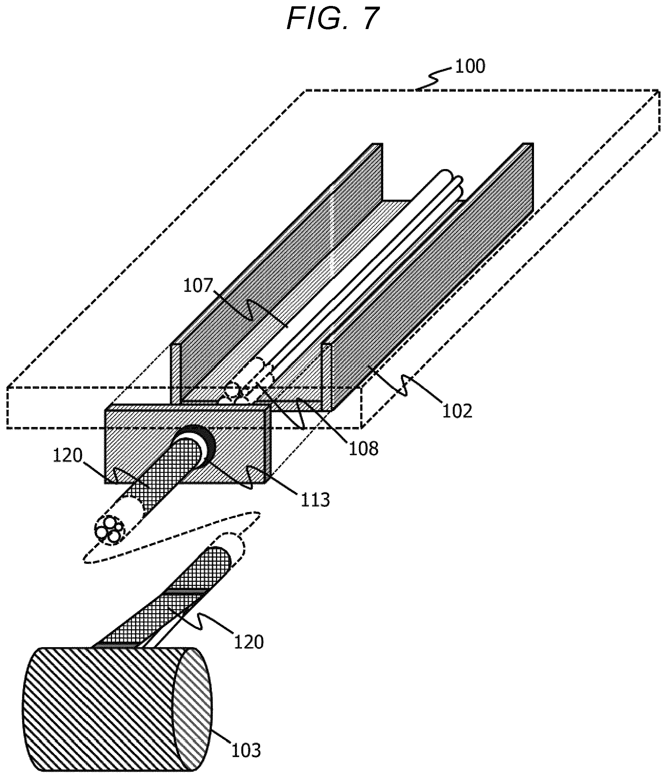

FIG. 7 shows another configuration example of the return conductor. The configuration example is an example in which the wire support structure 102, which supports the three-phase wire 107 and the frame ground wire 108 and has the same potential as the vehicle body 100, and the frame of the motor 103 are effectively connected by a return conductor 120 having a cable shield structure. Although the three-phase wire 107, the frame ground wire 108, and the return conductor 120 are partially divided for convenience of illustration, actually, the three-phase wire 107, the frame ground wire 108, and the return conductor 120 are continuously connected to each other. The return conductor 120 is configured as a flexible shield-shaped conductor that covers the three-phase wire 107 and the frame ground wire 108. Here, the connection to the wire support structure 102 side is a detachable relay connector 113, and the connection to the frame of the motor 103 is shown as a planar conductor such as a braided wire. In the configuration example, a portion of the three-phase wire 107 between the relay connector 113 and the motor 103 requires the flexibility. Further, both ends of the return conductor 120 may be connected with a low impedance, and other connection means may be adopted. The relay connector 113 electrically connects the return conductor 120, which is a shield, to a plate-shaped conductor on a mounting surface. In the figure, the best example is shown in which the plate-shaped conductor is connected to the wire support structure 102. Alternatively, the plate-shaped conductor may be configured as the relay terminal block of the configuration example before being separated from each other. At this time, the plate-shaped conductor is securely connected to the vehicle body 100. According to the configuration example, it is only necessary to add the cable shield structure to a part of a wiring path of the three-phase wire 107, and when the above configuration is compared to a configuration in which the cable shield is applied to all space from the main conversion device 101 to the motor 103, the above configuration is excellent in terms of weight, cost, and workability, and has a low possibility that an induced current will occur due to a potential difference between the two devices. In addition to this, an influence of increase of a shield inductance value due to increase of a cable length is limited. By adopting a connector that can be easily attached and detached, a railway vehicle, which is excellent in workability and durability and in which the noise return current is less diffused, can be provided.

According to the present embodiment, the three-phase wire is disposed close to the vehicle body by the wire support structure, and in the region where the flexibility of the three-phase wire between the wire support structure and the bogie unit is required, the return conductor that connects the frame of the motor and the vehicle body is disposed along the three-phase wire, so that a noise current return path and a noise current progress path are close to each other, and a current that diffuses and flows out to another device can be prevented. Further, since a loop area formed by the noise current path is reduced, radiation noise is also reduced. That is, a low-noise railway vehicle, which prevents malfunctions of on-track devices or on-vehicle devices from being induced and has a small amount of radiation noise to surrounding environment, can be provided.

### [Embodiment 2]

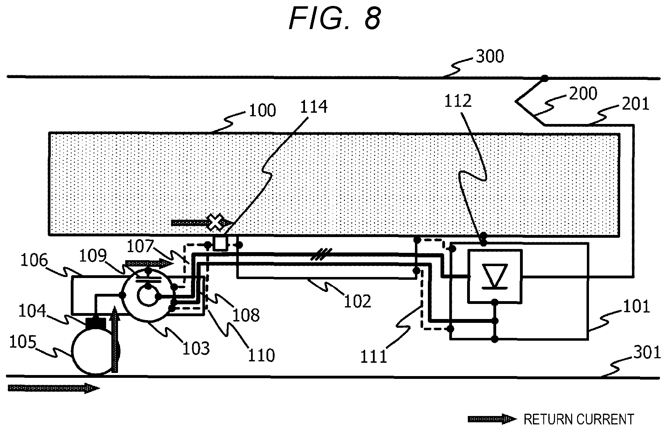

Hereinafter, a railway vehicle according to Embodiment 2 of the invention will be described with reference to FIG. 8.

FIG. 8 shows a configuration example in a case where a return current, which flows on the rail 301, to the substation must be taken into consideration in the configuration of the invention. A power obtained from the overhead wire 300 passes through a load on the vehicle and then returns to the substation through the rail 301. The return current flowing on the rail 301 may be in the order of several hundreds of amperes. Therefore, if a return current path passing through the vehicle body 100 is formed, the grounding device 104 or the like may be damaged. Therefore, even in the vehicle configuration in the related art, when the frame ground wire 108 is provided, a method is generally adopted in which a capacitor is provided on the frame ground wire 108 in the main conversion device 101 to block a direct current component of the return current or an alternating current component of a commercial frequency. Similarly, in the configuration of the invention, when there is a concern that a return current may flow on the vehicle and the frame of the motor 103 needs to be grounded, a path returning, through the wheel 105, the grounding device 104, the frame of the motor 103, the return conductor 110, and the vehicle body 100, to the rail 301 through other bogies or other vehicles is formed. Therefore, a capacitor 114 that blocks the return current on the return conductor 110 is disposed. The capacitor 114, which has a capacitance value with a low impedance of less than several Ω at a frequency of a noise current, is selected. In the figure, a position of the capacitor 114 is closer to the wire support structure 102 on the vehicle body 100. Alternatively, the capacitor 114 may be disposed on the motor 103 side as long as the capacitor 114 is securely fixed and vibration resistance is sufficient. Further, when the return conductor 110 is connected to the vehicle body 100 or the wire support structure 102 by the relay connector 113, the capacitor 114 may be mounted in a connector shell.

According to the present embodiment, a railway vehicle in which the return current is prevented from flowing in and the noise return current is less diffused can be provided.

### [Embodiment 3]

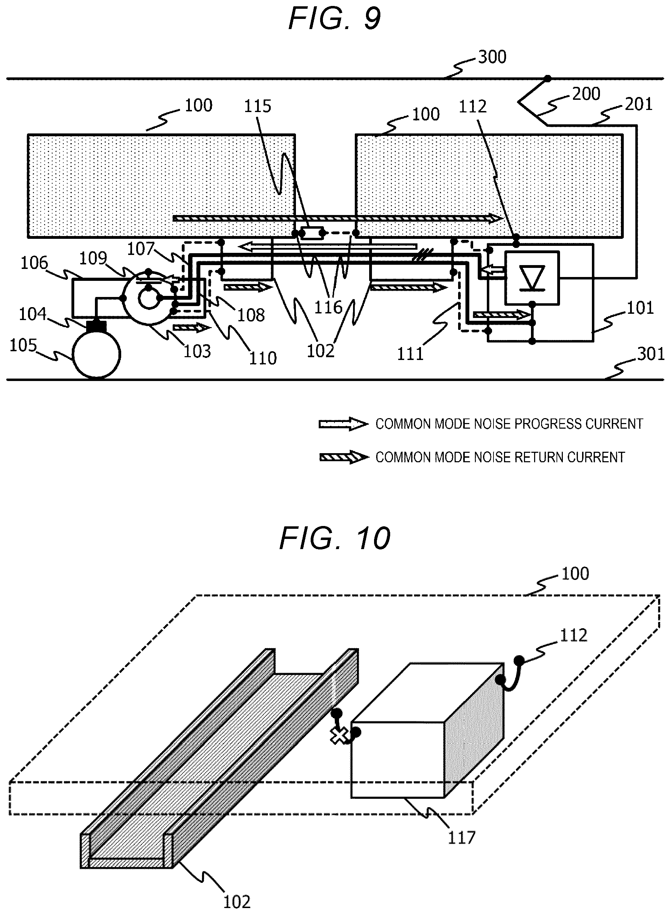

Hereinafter, a railway vehicle according to Embodiment 3 of the invention will be described with reference to FIG. 9.

FIG. 9 is a configuration example in a case where a three-phase alternating current power is transmitted from the main conversion device 101 to the motor 103 of an adjacent vehicle in the configuration of the invention. In the figure, the three-phase alternating current power is transmitted from the main conversion device 101 to the motor 103 of the adjacent vehicle 100 by the three-phase wire 107. In this case, there is a gap between the vehicles where the vehicle body 100, which is a main path of the noise return current, is interrupted. In the gap, an inter-vehicle return conductor 116 is disposed so as to cross the gap between the vehicle bodies and close to and along the three-phase wire 107. The inter-vehicle return conductor 116 is a low-inductance conductor, and a recommended structure or the like of the inter-vehicle return conductor 116 is a planar conductor or a plurality of wires similar to the return conductor 110. Further, a shield-shaped conductor that covers the three-phase wire 107 can be used.

Similar to Embodiment 2, when the return current may flow through the inter-vehicle return conductor 116, a resistor 115 is provided in a path of the inter-vehicle return conductor 116. The resistor 115 may have a resistance value larger than that of the rail 301, and may have a resistance value of 0.5 Ω or more. Further, when the resistor 115 has a large inductance value, capacitors having a low impedance in a frequency band of a noise current may be provided in parallel. Further, a capacitor may be provided instead of the resistor 115.

According to the present embodiment, a railway vehicle in which the return current is prevented from flowing in and the noise return current is less diffused even when the motor of the adjacent vehicle is extendedly driven can be provided.

Further Example ]

Hereinafter, a railway vehicle according to an example for understanding the invention will be described with reference to FIG. 10.

FIG. 10 is a diagram showing an attachment position of a ground wire of an on-vehicle device 117 disposed around the wire support structure 102 in the configuration of the invention. A noise return current flows around the wire support structure 102 and on the vehicle body 100. When the ground wire 112 of the on-vehicle device 117 is connected to the vehicle body 100 in this region, the noise return current may flow into the on-vehicle device 117. Therefore, it is desirable that the ground wire 112 is not provided in a region of less than 30 cm around the wire support structure 102 and the ground wire 112 is connected to the vehicle body 100 outside the vehicle as much as possible. When the wire support structure 102 has openings on sides and a lower side, for example, has a ladder shape, the connection to the ground wire 112 is avoided in a region of less than 50 to 60 cm around the wire support structure 102. Further, draw-in holes or the like for other low-voltage wiring or wiring on the vehicle induce diffusion of the noise return current, so that the ground wire 112 is disposed avoiding the above region.

According to the present embodiment, a railway vehicle in which the noise return current is less diffused to other devices including on-vehicle devices around the three-phase wire can be provided.

## Claims

1. A railway vehicle, comprising:
a motor (103) that is disposed on a bogie (106) and is configured to rotationally drive a wheel (105);
a main conversion device (101) configured to convert a power supplied from an overhead wire (300) into a three-phase alternating current power for driving the motor (103);
a three-phase wire (107) that connects the motor (103) and the main conversion device (101) and is configured to transmit the three-phase alternating current power;
a vehicle body (100), which is a conductor, that continuously covers at least a space between the motor (103) and the main conversion device (101);
a wire support structure (102) that supports the three-phase wire (107) such that the three-phase wire (107) is close to the vehicle body side;
a ground conductor (112) that electrically connects the main conversion device (101) and the vehicle body (100); and
a return conductor (110; 110b; 120) that electrically connects a frame of the motor (103) and the vehicle body (100) in a region where flexibility of the three-phase wire (107) is required,
wherein
the region where the flexibility of the three-phase wire (107) is required includes at least a region between the motor (103) and an end of the wire support structure (102) on the motor side,
the return conductor (110; 110a; 120) is disposed along the three-phase wire (107),
the return conductor (110; 110b) is formed of a planar conductor or a plurality of wires, and is disposed so as to cover at least a surface of the three-phase wire (107) on the vehicle body side, or the return conductor (120) is formed of a shield-shaped conductor that covers a periphery of the three-phase wire (107), and
the wire support structure (102) is electrically connected to the vehicle body (100),
whereby
the return conductor (110; 110b; 120) is electrically connected to the vehicle body (100) by connecting to the wire support structure (102), and
the wire support structure (102) is a trough-shaped structure or a ladder-shaped structure.

2. The railway vehicle according to claim 1, further comprising:
a further return conductor (110b) that covers a surface of the three-phase wire (107) opposite to the vehicle body side.

3. The railway vehicle according to claim 1, wherein the return conductor (120) is formed of a shield-shaped conductor that covers a periphery of the three-phase wire (107), and the return conductor (120) is connected to the wire support structure (102) by a detachable relay connector (113).

4. The railway vehicle according to claim 1, wherein the return conductor (110) and the vehicle body (100) are electrically connected via a capacitor (114).

5. The railway vehicle according to claim 1, further comprising:
an inter-vehicle return conductor (116) configured to electrically connect the vehicle body (100) and a vehicle body (100) of an adjacent vehicle in a train configuration in which the three-phase alternating current power is transmitted from the main conversion device (101) to a motor (103) of the adjacent vehicle,
wherein the inter-vehicle return conductor (116) is disposed along the three-phase wire (107) that is disposed across a gap between the vehicle bodies.

6. The railway vehicle according to claim 5, wherein the inter-vehicle return conductor (116) is formed of a planar conductor or a plurality of wires.

7. The railway vehicle according to claim 5, wherein the inter-vehicle return conductor (116) is formed of a shield-shaped conductor that covers the three-phase wire (107) disposed across the gap between the vehicle bodies.

8. The railway vehicle according to claim 5, wherein the vehicle body (100) and the vehicle body (100) of the adjacent vehicle are electrically connected via a resistor (115) or a capacitor.

## Patentansprüche

1. Schienenfahrzeug, umfassend:
einen Motor (103), der auf einem Drehgestell (106) angeordnet und dazu konfiguriert ist, ein Rad (105) rotierend anzutreiben;
eine Hauptumrichtervorrichtung (101), die dazu konfiguriert ist, eine von einer Oberleitung (300) zugeführte Leistung in eine dreiphasige Wechselstromleistung zum Antreiben des Motors (103) umzuwandeln;
eine Dreiphasenleitung (107), die den Motor (103) und die Hauptumrichtervorrichtung (101) verbindet und dazu konfiguriert ist, die dreiphasige Wechselstromleistung zu übertragen;
einen Fahrzeugkasten (100), der ein Leiter ist, der kontinuierlich zumindest einen Raum zwischen dem Motor (103) und der Hauptumrichtervorrichtung (101) abdeckt;
eine Leitungsträgerstruktur (102), die die Dreiphasenleitung (107) derart trägt, dass die Dreiphasenleitung (107) nahe zur Fahrzeugkastenseite ist;
einen Erdleiter (112), der die Hauptumrichtervorrichtung (101) und den Fahrzeugkasten (100) elektrisch verbindet; und
einen Rückleiter (110; 110b; 120), der ein Gehäuse des Motors (103) und den Fahrzeugkasten (100) in einem Bereich elektrisch verbindet, in dem Flexibilität der Dreiphasenleitung (107) erforderlich ist,
wobei
der Bereich, in dem die Flexibilität der Dreiphasenleitung (107) erforderlich ist, zumindest einen Bereich zwischen dem Motor (103) und einem Ende der Leitungsträgerstruktur (102) auf der Motorseite umfasst,
der Rückleiter (110; 110a; 120) entlang der Dreiphasenleitung (107) angeordnet ist,
der Rückleiter (110; 110b) aus einem Flächenleiter oder einer Mehrzahl von Leitungen gebildet und so angeordnet ist, dass er zumindest eine Fläche der Dreiphasenleitung (107) auf der Fahrzeugkastenseite abdeckt, oder der Rückleiter (120) aus einem schildförmigen Leiter gebildet ist, der einen Umfang der Dreiphasenleitung (107) abdeckt, und
die Leitungsträgerstruktur (102) elektrisch mit dem Fahrzeugkasten (100) verbunden ist,
wobei
der Rückleiter (110; 110b; 120) durch Verbindung mit der Leitungsträgerstruktur (102) elektrisch mit dem Fahrzeugkasten (100) verbunden ist, und
die Leitungsträgerstruktur (102) eine trogförmige Struktur oder eine leiterförmige Struktur ist.

2. Schienenfahrzeug nach Anspruch 1, ferner umfassend:
einen weiteren Rückleiter (110b), der eine Fläche der Dreiphasenleitung (107) gegenüber der Fahrzeugkastenseite abdeckt.

3. Schienenfahrzeug nach Anspruch 1, wobei der Rückleiter (120) aus einem schildförmigen Leiter gebildet ist, der einen Umfang der Dreiphasenleitung (107) abdeckt, und der Rückleiter (120) durch einen abnehmbaren Relaisverbinder (113) mit der Leitungsträgerstruktur (102) verbunden ist.

4. Schienenfahrzeug nach Anspruch 1, wobei der Rückleiter (110) und der Fahrzeugkasten (100) über einen Kondensator (114) elektrisch verbunden sind.

5. Schienenfahrzeug nach Anspruch 1, ferner umfassend:
einen fahrzeugübergreifenden Rückleiter (116), der dazu konfiguriert ist, den Fahrzeugkasten (100) und einen Fahrzeugkasten (100) eines benachbarten Fahrzeugs in einer Zugkonfiguration elektrisch zu verbinden, in der die dreiphasige Wechselstromleistung von der Hauptumrichtervorrichtung (101) zu einem Motor (103) des benachbarten Fahrzeugs übertragen wird,
wobei der fahrzeugübergreifende Rückleiter (116) entlang der Dreiphasenleitung (107) angeordnet ist, die über einen Spalt zwischen den Fahrzeugkästen angeordnet ist.

6. Schienenfahrzeug nach Anspruch 5, wobei der fahrzeugübergreifende Rückleiter (116) aus einem Flächenleiter oder einer Mehrzahl von Leitungen gebildet ist.

7. Schienenfahrzeug nach Anspruch 5, wobei der fahrzeugübergreifende Rückleiter (116) aus einem schildförmigen Leiter gebildet ist, der die Dreiphasenleitung (107) abdeckt, die über den Spalt zwischen den Fahrzeugkästen angeordnet ist.

8. Schienenfahrzeug nach Anspruch 5, wobei der Fahrzeugkasten (100) und der Fahrzeugkasten (100) des benachbarten Fahrzeugs über einen Widerstand (115) oder einen Kondensator elektrisch verbunden sind.

## Revendications

1. Véhicule ferroviaire, comprenant :
un moteur (103) qui est disposé sur un bogie (106) et est configuré pour entraîner une roue (105) ;
un dispositif principal (101) de conversion configuré pour convertir une énergie fournie depuis une caténaire (300) en une énergie de courant alternatif triphasé pour entraîner le moteur (103) ;
un câble triphasé (107) qui connecte le moteur (103) et le dispositif principal (101) de conversion et est configuré pour transmettre l'énergie de courant alternatif triphasé ;
une carrosserie (100) de véhicule, qui est un conducteur, qui recouvre de façon continue au moins un espace entre le moteur (103) et le dispositif principal (101) de conversion ;
une structure (102) de support de câble qui supporte le câble triphasé (107) de telle façon que le câble triphasé (107) est proche du côté carrosserie de véhicule ;
un conducteur (112) de masse qui connecte électriquement le dispositif principal (101) de conversion et la carrosserie (100) de véhicule ; et
un conducteur (110 ; 110b ; 120) de retour qui connecte électriquement un châssis du moteur (103) et la carrosserie (100) de véhicule dans une région où une flexibilité du câble triphasé (107) est requise,
dans lequel
la région où la flexibilité du câble triphasé (107) est requise inclut au moins une région entre le moteur (103) et une extrémité de la structure (102) de support de câble sur le côté moteur,
le conducteur (110 ; 110a ; 120) de retour est disposé le long du câble triphasé (107),
le conducteur (110 ; 110b) de retour est constitué d'un conducteur plan ou d'une pluralité de fils, et est disposé de façon à recouvrir au moins une surface du câble triphasé (107) sur le côté carrosserie de véhicule, ou bien le conducteur (120) de retour est constitué d'un conducteur en forme d'écran qui recouvre une périphérie du câble triphasé (107), et
la structure (102) de support de câble est électriquement connectée à la carrosserie (100) de véhicule,
ce par quoi
le conducteur (110 ; 110b ; 120) de retour est électriquement connecté à la carrosserie (100) de véhicule par connexion à la structure (102) de support de câble, et
la structure (102) de support de câble est une structure en forme de gouttière ou une structure en forme d'échelle.

2. Véhicule ferroviaire selon la revendication 1, comprenant en outre :
un autre conducteur (110b) de retour qui recouvre une surface du câble triphasé (107) opposé au côté carrosserie de véhicule.

3. Véhicule ferroviaire selon la revendication 1, dans lequel le conducteur (120) de retour est constitué d'un conducteur en forme d'écran qui recouvre une périphérie du câble triphasé (107), et le conducteur (120) de retour est connecté à la structure (102) de support de câble par un connecteur relais détachable (113).

4. Véhicule ferroviaire selon la revendication 1, dans lequel le conducteur (110) de retour et la carrosserie (100) de véhicule sont électriquement connectés par l'intermédiaire d'un condensateur (114).

5. Véhicule ferroviaire selon la revendication 1, comprenant en outre :
un conducteur (116) de retour inter-véhicules configuré pour connecter électriquement la carrosserie (100) de véhicule et une carrosserie (100) de véhicule d'un véhicule adjacent dans une configuration de train dans laquelle l'énergie de courant alternatif triphasé est transmise depuis le dispositif principal (101) de conversion à un moteur (103) du véhicule adjacent,
dans lequel le conducteur (116) de retour inter-véhicules est disposé le long du câble triphasé (107) qui est disposé au travers d'un espace entre les carrosseries de véhicules.

6. Véhicule ferroviaire selon la revendication 5, dans lequel le conducteur (116) de retour inter-véhicules est constitué d'un conducteur plan ou d'une pluralité de fils.

7. Véhicule ferroviaire selon la revendication 5, dans lequel le conducteur (116) de retour inter-véhicules est constitué d'un conducteur en forme d'écran qui recouvre le câble triphasé (107) disposé au travers de l'espace entre les carrosseries de véhicules.

8. Véhicule ferroviaire selon la revendication 5, dans lequel la carrosserie (100) de véhicule et la carrosserie (100) de véhicule du véhicule adjacent sont électriquement connectées par l'intermédiaire d'une résistance (115) ou d'un condensateur.
